(19) Europäisches Patentamt / European Patent Office / Office européen des brevets

(11) **EP 3 343 475 A1**

(12) **EUROPEAN PATENT APPLICATION**

(43) Date of publication:
**04.07.2018 Bulletin 2018/27**

(51) Int Cl.:
***G06Q 10/06*** *(2012.01)*

(21) Application number: **16207443.9**

(22) Date of filing: **30.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Siemens Aktiengesellschaft**
**80333 München (DE)**

(72) Inventor: **MONTALDO, Ernesto**
**16129 Genova (IT)**

(74) Representative: **Maier, Daniel Oliver**
**Siemens AG**
**Postfach 22 16 34**
**80506 München (DE)**

(54) **LONG-RUNNING CONDITION RECOVERY METHOD**

(57)     Method for dealing with a long-running condition during the execution of a MES or MOM related workflow, the method comprising:
detecting the occurrence of a long-running condition during the execution of a workflow instance belonging to the workflow;
saving (53) execution data of the workflow instance in order to prevent loss of execution data;
unloading the workflow instance;
restoring the execution data of the previously unloaded workflow instance;
restoring the execution of the workflow from where it has been suspended. A software and a workflow engine capable of performing the method are also disclosed.

## FIG 5

**Description**

The invention relates to a method for dealing with a long-running condition during the execution of a workflow, in particular a workflow in the field of a Manufacturing Execution System (MES) or Manufacturing Operation Management (MOM). Most recently, the term MOM is more and more used to replace the term MES.

As defined by the Manufacturing Enterprise Solutions Association (MESA International), a MES/MOM system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication."

The functions that MES/MOM systems usually include, in order to improve quality and process performance of manufacturing plants, are resource allocation and status, dispatching production orders, data collection/acquisition, quality management, maintenance management, performance analysis, operations/detail scheduling, document control, labor management, process management and product tracking.

For example, the Siemens Corp. offers a broad range of MES/MOM products under its SIMATIC IT® product family.

Specifically to a Manufacturing Workflow Management System, long-running is a complex condition that is related to the execution time of workflow elements (e.g. user tasks, that are tasks requiring a human action, or service tasks, that are automated tasks without human action), and how this execution time can affect the whole workflow instance execution.

In general, a workflow can be defined as a set of business process activities that are orchestrated and executed by a dedicated process that is widely identified as the "workflow engine" (Wikipedia under "Workflow engine")

During the execution of a workflow instance (i.e. a series of tasks belonging to the workflow) it could happen that one or more activities (e.g. tasks) can require an execution time that is longer than expected. This behavior for the workflow tasks is named long-running. One or more long-running tasks can affect the execution of a workflow instance because longer execution can take the whole workflow instance in an inactive state. A task can be in a long-running condition either because is waiting for some user inputs or because is related to an action requiring a large amount of time to be completed. This large amount of time that is required to complete a task execution affects the workflow instance execution as a whole. Having a workflow instance in an inactive state can cause an inefficient use of the system resources, such as the memory and the workflow engine responsible for the execution of that particular workflow instance. This can affect also performances and scalability (an allocated workflow engine instance is not able to execute other workflow instances.

Even if Workflow Management Systems are considered a mature technology for designing, automating, and controlling business processes, and many vendors are active in the field, developing innovative solutions, today the long-running problem, has not been properly addressed, especially in the field of MES/MOM technologies.

Therefore, the need is felt to develop appropriate long-running mechanisms, i.e. sets of behaviors, functionalities, data models, and components that are designed to manage a long-running condition, mechanism to be integrated in a workflow engine.

The problems mentioned above have now been solved by a method for dealing with a long-running condition during the execution of a MES or MOM related workflow, the method comprising:

detecting the occurrence of a long-running condition during the execution of a workflow instance belonging to the workflow;
saving execution data of the workflow instance in order to prevent loss of execution data;
unloading the workflow instance;
restoring the execution data of the previously unloaded workflow instance;
restoring the execution of the workflow from where it has been suspended.

According to an embodiment of the invention, the long-running mechanism is implemented as an automatic behavior that needs no activation by the user.

According to a preferred embodiment of the invention, the execution of the method is suitable to be disabled, e.g. before the execution of the workflow; the disablement can be upon user request or automatic, depending on the occurrence of particular conditions. There can be some conditions, indeed, whereby interruption of a workflow instance is undesirable even if a long-running condition occurs.

The invention also relates to a software product capable of performing a method as above defined. The software product can be integrated in a workflow engine, capable of executing a workflow where the above method can be applied.

The invention also relates to a workflow engine comprising such software product.

The execution of the software is suitable to be disabled, as said above.

The invention will now be better illustrated with the aid of the appended figures, of which:

Figure 1    shows a flow diagram of an example workflow instance of a workflow;

Figure 2    shows a flow diagram of another example workflow instance of a workflow;

Figure 3    shows a flow diagram of yet another example workflow instance of a workflow;

Figure 4    shows a diagram representing a data model for a workflow;

Figure 5    shows shows a flow diagram of a workflow, showing different instants for saving data.

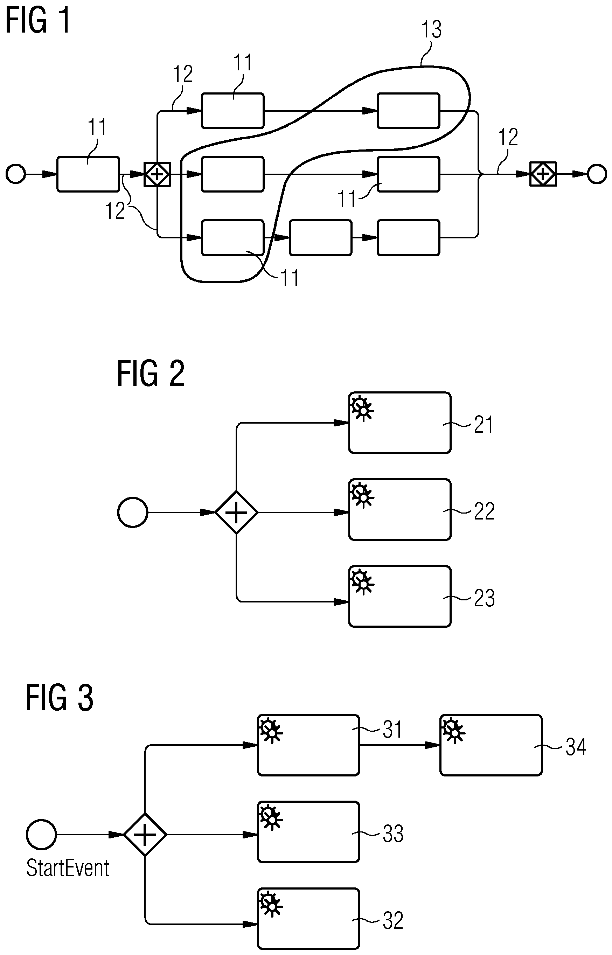

With reference to figure 1, it is described a possible way of determining a long-running condition according to the method of the invention.

During the execution of a workflow instance some tasks could require an execution time that could exceed a maximum execution duration, and this condition could take the entire running workflow instance in an inactive state.

$T_i$ is the time that a workflow task i-th of a workflow instance is using for its completion and is defined as execution time (also execution duration. The time that is recognized as timeout is represented as L. Thus, the workflow task i-th is considered in a long-running condition if, and only if, $T_i > L$. A workflow instance is considered to be in an inactive state if a long-running condition occurs before it ends.

An execution step is defined as a set of workflow tasks that can be executed at the same time. In figure 1 the tasks are indicated with rectangles 11. A plurality of branches 12, is represented. The set can be made of tasks belonging to either parallel branches or independent branches. The value of L may change during the workflow instance execution according to the set of tasks that are currently executed (the execution step). The line indicated with 13 encompasses three tasks that can constitute an example of an execution step.

The timeout value *L* related to the long-running condition is, according to an embodiment of the invention, dynamically calculated during the execution of the workflow instance. The computation of *L* is based on the knowledge, for each workflow element, of an associated maximum execution duration. In particular, it is assumed that the following characteristics are known for each workflow element:

starting time $t_s$;
estimated ending time $t_e$ (taking into account the time required to execute the task).

Estimated execution duration as $(t_e + offset) - t_s$ (this value could be, for example, a statistical mean value determined from repeated executions of the workflow); where the *offset* is a safety margin such that only a very small percentage of all executions took longer than this time in the past. Ideally, according to a possible way to operate, the value can be set to zero determining a minimum value for the execution duration.

The value *L* can be updated according to the estimated execution duration of each workflow task and it represents the timeout for the workflow execution. The *L* value changes over the workflow instance execution that has to be monitored in order to detect potential long-running conditions. In order to detect potential long-running conditions it is important to trace also the passing of time. The passing of time can be evaluated, for example, by relying on a master clock, which collects events sent by each workflow task whenever it starts its execution. In detail, this method is based on the execution of the following steps:

the workflow engine calculates first a set of workflow tasks that has to be executed (execution step);
for this set of tasks either a maximum execution time or the aminimum execution time can be evaluated. In particular, the minimum is referred to a condition that privileges short executions (high probability of incurring a long-running condition), whereas the maximum is referred to a condition that privileges long execution (low probability of incurring a long-running condition).

The resulting value of this computation is the next estimated timeout *L* for the workflow instance. This means that the workflow engine will wait a value of L before checking the state of the running workflow instance. After L the workflow engine verifies which of the following conditions occurs:

$$\begin{cases} t_{now} - t_{Start} > L \rightarrow & Long\ Running \\ t_{now} - t_{Start} \le L \rightarrow Not\ Long\ Running \end{cases}$$

wherein $t_{start}$ indicates the time instant when the workflow element (possibly including the main workflow instance itself) started the execution and $t_{now}$ is the time instant the workflow engine performs the check. This is the condition for pausing the workflow instance: the current execution duration of the workflow instance, measured since the last execution step started, exceeds a threshold value $L$.

Each time a workflow task starts its execution it sends an event to the master clock with the related starting time; the master clock updates the execution time value for the workflow instance according to the received event;

when a workflow task terminates its execution is no longer available for the computation of $L$;

once a workflow task terminates, the workflow engine performs a new computation against a new set of tasks that must be executed next, including the tasks that are still in execution;

the workflow engine calculates the maximum remaining time (or the minimum, see the second step) for the active tasks and a new value of $L$ is computed.

A workflow instance can be unloaded when all the workflow tasks currently in execution have been in execution already for longer than their respective maximum duration.

As far as the mathematical explanation is concerned, the method can be formalized as follows.

As shown in figure 2, for example three tasks 21, 22 and 23 are running in parallel, belong to the same execution step and, considering the case of low probability of being in a long-running condition, L can be calculated as follows:

$$L = max[((te + offset) - ts)_1, ((te + offset) - ts)_2, ((te + offset) - ts)_3]$$

where each element evaluated in the *max* function is the estimated execution time for the related task, that is, the element *((te+offset)-ts)₁* is referred to the task 21, *((te+offset)-ts)₂* is referred to the task 22, and *((te+offset)-ts)₃* is referred to the task 23. In general, the *i-th* element *((Te+offset)-Ts)₁* is referred to the *i-th* task in the execution step.

Once the value of $L$ has been calculated, the workflow task that has been completed is removed from the basket of running elements. The *max* value for the cost function is thus calculated again against the remaining running elements including the next running elements. In general, each time the number of running elements is changed the function must be evaluated. The general formalization for the method is represented as follows:

$$L_i = max[((te + offset) - ts)_1, ((te + offset) - ts)_2, ((te + offset) - ts)_3$$
$$+ \ldots + ((te + offset) - ts)_n]$$

Wherein $L_i$ is the long-running value for the *i-th* execution step; n is the number of running tasks at the time $t_{now_i}$, wherein $t_{now_i}$ is the *i-th* time value calculated before executing the *i-th* execution step.

The first evaluation, that is for the step number 0, is as follows:

$$l_0 = t_0 + max\{[(t_e + offset) - t_s]_1, [(t_e + offset) - t_s]_2, \ldots, [(t_e + offset) - t_s]_m\}_0$$

$l_0$ being the instant time for determining the long-running condition of step 0. Then, for the second execution step that is the number *1*, we can write that the long-running time instant $l_1$ is as follows:

$$l_1 = t_1 + max\{[(t_e + offset) - t_s]_1, [(t_e + offset) - t_s]_2, \ldots, [(t_e + offset) - t_s]_m\}_1$$

where $t_1$ can be also expressed as the sum of $t_0$ and the minimum execution time at the previous step (that is related to the task that is taken out from the basket of execution tasks).

Assuming the representation of $t_1$ in relation to the minimum execution time at the previous step we can write the value of 1 for the second execution as it follows:

$$l_1 = t_0 + \min_0\{[(t_e + offset) - t_s]_1, [(t_e + offset) - t_s]_2, \dots, [(t_e + offset) - t_s]_k\}_0$$
$$+ \max_1\{[(t_e + offset) - t_s]_1, [(t_e + offset) - t_s]_2, \dots, [(t_e + offset)$$
$$- t_s]_m\}_1$$

Where:

   o $m$ is the number of tasks running at the *1-th* execution step
   o k is the number of tasks running at the *0-th* execution step

In general, we can formalize the method as it follows:

$$l_i = t_0 + \sum_{j=0,i>0}^{i-1} \min_j\{[(t_e + offset) - t_s]_1, \dots, [(t + offset) - t_s]_k\}_j$$
$$+ \sum_{n=0}^{i} \max_n\{[(t_e + offset) - t_s]_1, \dots, [(t_e + offset) - t_s]_m\}_n$$

Where k are the executed tasks at the step *(i-1)-th,* whereas m are the executed tasks at the step *i-th.*
A more compressed formula can be:

$$\begin{cases} l_i = t_0 + \sum_{j=0,i>0}^{i-1} \min_j\{\Delta_1, \dots, \Delta_k\}_j + \sum_{n=0}^{i} \max_n\{\Delta_1, \dots, \Delta_m\}_n \\ where\ \Delta_d = \left[\left[(t_e + t_{offset}) - t_s\right]\right]_d \end{cases}$$

The 1 value can be evaluated following three alternatives: The *max* function can be calculated without considering the remaining execution time of each task. This option means that, each time a new long-running instant time 1 is evaluated, the currently executing tasks are also reconsidered for the next evaluation step. Considering the Fig. 3 as example, the variable *l* for the second execution step, that includes the tasks indicated with references 32, 33 and 34 can be evaluated as follows (the previous step having included the tasks indicated with 31, 32 and 33), where $\Delta_1$ is the execution time for task 31, $\Delta_2$ is the execution time for task 32 and $\Delta_3$ is the execution time for task 33:

$$l_2 = t_0 + \min_1\{\Delta_1, \Delta_2, \Delta_3\}_1 + \max_2\{\Delta_2, \Delta_3, \Delta_4\}_2$$

Considering in the *max* function also the currently executing tasks considering the remaining execution time of each task as well. Considering the Fig. 3 as example, the variable 1 for the second execution step, can be evaluated as it follows:

$$l_2 = t_0 + \min_1\{\Delta_1, \Delta_2, \Delta_3\}_1 + \max_2\{\Delta_2 - \Delta_1, \Delta_3 - \Delta_1, \Delta_4\}_2$$

where ($\Delta_i$-$\Delta_j$) is the remaining execution time for the $\Delta i$ execution assuming that the $\Delta_j$ execution ended.
Finally, evaluation can be done considering in the *max* function only tasks that has to be executed. This method implies to evaluate the value *l* only for the set of tasks that has to be executed in the next execution step. This means that more than one value *l* is calculated during the workflow execution. Considering the Fig. 3 as example, the variable *l* is evaluated first for the parallel tasks 31, 32 and 33, and then when 31 ends the value *l* is evaluated against the next set of tasks (in the example is task 34).

The new value of L is evaluated as it follows:

$$l = max(l_i, l_{i+1})$$

where *i* and *i+1* are respectively the *i-th* and *(i+1)-th* execution steps.

The evaluation of *l* can be extended considering sequential tasks as a single execution. The execution time for sequential tasks is evaluated as the sum of each execution task. In particular, considering the example depicted in Fig. 3 the evaluation of *l* is as follows:

$$l = t_{now} + max[\Delta_1 + \Delta_4, \Delta_2, \Delta_3]$$

A further alternative solution is on a static value of the execution timeout *L*. In particular, the value *L* is a global variable that does not depend from the workflow topology, but it is predefined and applied uniformly for the whole workflow execution. This value can be set by the user or provided as an out-of-the-box value. The workflow engine performs the checks against a fixed value applying the same condition as for the dynamic value approach. In particular, the set of actions to be performed during workflow instance execution are as follows:

The workflow instance starts the execution with a pre-set value of L and a $t_{start}$ is set.

Then detection is based on the following condition, where $t_{now}$ is the present instant of time:

$$\begin{cases} t_{now} - t_{Start} > L \rightarrow & \text{Long Running} \\ t_{now} - t_{Start} \leq L \rightarrow \text{Not Long Running} \end{cases}$$

Each time a workflow instance is executed, the value of the workflow task start time is updated.

As said above, the long-running mechanism described is an automatic mechanism that can be activated even not upon request, but under some conditions it may be necessary, or preferable, to have the opportunity of disabling it when a workflow instance cannot be saved and interrupted.

For example, the user may want to avoid the long-running mechanism and wait for the workflow execution even if a long-running condition is detected, having to wait for an intermediate event requesting a time generally longer than the long-running condition.

A second example is when a workflow works on full-manual mode. Unloading a workflow instance is then not necessary whereas saving data is still a requirement.

A third example is because of a synchronous mechanism resulting in a non-interruptible task. If a synchronous mechanism exists between the instances responsible for requesting an action and executing the action itself, the long-running cannot be activated, since the instances must be active for the entire communication thread and the workflow instance cannot be unloaded.

This feature implies that the workflow engine must preferably capable of determining if some elements (including the workflow instance itself) are not-interruptible.

It must be predetermined for the whole workflow. This feature can be bassed on a set of weights that are defined for each element within the workflow. Each element is then predefined as interruptible or non-interruptible. In case of an interruptible behavior the weight is set to 0 whereas in case a non-interruptible behavior the weight is set to 1. The overall behavior is evaluated with a sum over the single weights.

Let us assume that *M* is the number of element belonging to the workflow instance including the instance itself, and x is the weight defined for each element. The overall behavior B is defined as follows:

$$\begin{cases} B(x_i) = \sum_{i=1}^{M} x_i \\ where\ x \in (0, 1) \end{cases}$$

The interruptible or non-interruptible behavior can be summarized with the following conditions:

$$\begin{cases} B(x_i) > 0 \ \to non-interruptible \\ \quad B(x_i) = 0 \ \to interruptible \end{cases}$$

This behavior must preferably calculated during each workflow execution because a request for non-interruptible execution may come from an external source (e.g. switching to a manual execution mode).

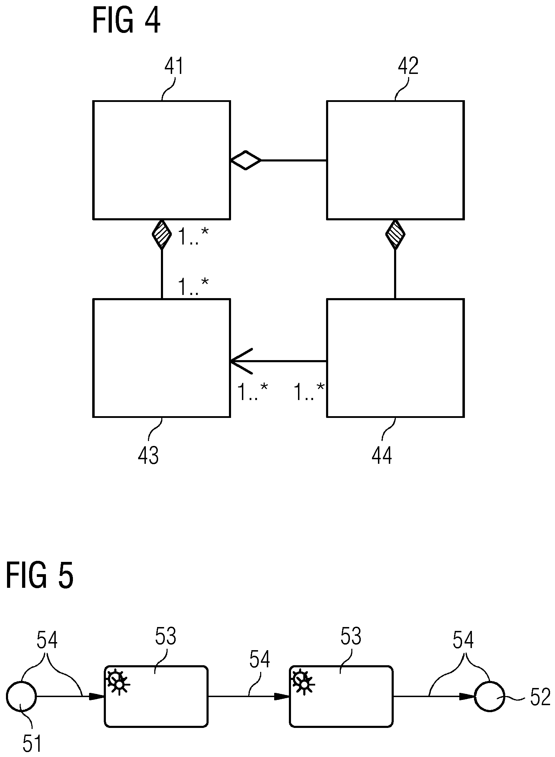

In order to correctly execute the main phases of the long-running mechanism, in particular saving and retrieving the workflow execution data, the whole set of information has to be represented in a well-defined data model. Internal data such as the workflow definition, the workflow elements belonging to a workflow definition, the events, and the instances must preferably be designed in the form of a data model with its own specific domain. This data model is defined as a domain providing access for both reading and writing procedures. Figure 4 is an example representation of this data model, in the UML (Unified Modeling Language), wherein 41 is the workflow definition, 42 is the workflow element definition, 43 is the workflow instance, 44 is the workflow element instance.

It is important to recognize the required information that must be saved when unloading a workflow instance. The correctness of this information assures that a recovery operation is performed correctly.

Some properties, which can be identified as eligible for saving a complete workflow execution state (the running instance) are as follows.

Executed tasks, i.e. the list of tasks that have been executed. This information avoids re-executing tasks when the workflow instance is restored.

Execution outcomes, i.e. the list of outcomes for each executed task. This is important because the outcome of a task can be used for decision from other elements, such as gateways.

Execution times, i.e. the list of execution times for all the executed tasks. This preferably also includes start time and end time. It is important for having additional information about executed tasks (it may also useful for statistics). It can be also used to determine if a task has actually ended (otherwise, end time should be indicated as NULL).

The workflow instance identifier, i.e. an unique identifier for a specific workflow running instance. The workflow instance identifier is needed to identify the right workflow when a recovery operation must be performed.

The task identifier, i.e. an unique identifier for a specific executed and running task. This links task specific information to the related task.

Input variables for each task. The status of the variable before the execution is important, when the workflow has to be resumed, to allow to execute (or re-execute) the task.

Output variables. The status of the variable at the end of each execution is important in order to have the correct state of each outcome. They could be also used by other elements, in particular developed under BPMN (Business Process Model and Notation) specifications.

Environment variables, such as the variable used to count the passing of time.

Pending operations, i.e. the list of operations sent for execution.

Saving execution data implies also considering the following aspects: how frequently data should be saved and how to access data for writing purposes.

The saving mechanism provides the Manufacturing Workflow Management System with a persistent view of the execution data that is important for the following reasons.

It allows to manage the long-running condition correctly, because all the execution data must be already saved before suspending a workflow execution with the aim to be correctly retrieved when a workflow instance has to be resumed from where the execution has been suspended.

It helps the system to survive a system crash because, again, because the workflow instance must be resumed to continue the execution from where it has been suspended.

It allows the system to provide consumable data for both runtime view of the workflow and reporting and analysis purposes.

The data must be preferably always saved incrementally. This means that all data changes detected during a workflow execution must be always saved on a persistent storage means with the goal to provide a common, reliable, and available view of the execution data. The workflow engine to save data during the workflow execution as exemplified in figure 5, wherein 51 and 52 indicate a starting and an end point respectively, for a workflow instance. 53 indicate a series of activities, in particular steps. 54 indicate the point when data must be stored.

The workflow engine must also correctly resume a workflow instance previously unloaded. An unloaded workflow instance must be resumed when a response (e.g. from a user) is received. Resuming a workflow instance is a crucial aspect. We have to distinguish different situation that must be managed by the mechanism

The first is when a workflow instance is still running and managed by a specific engine, when a plurality of engines operates. The resuming process for that particular instance cannot be managed by another engine: it must be managed by that specific workflow engine.

The second is when the workflow instance is completed and not managed by a workflow engine so it cannot be resumed.

Finally, when a workflow instance is available and not managed by a specific engine. It means that the instance is unloaded and can be resumed by any available workflow engine. It is thus preferable always to know which workflow instance is executed by a particular workflow engine instance. The workflow engine must notify to the system the specific workflow instance that is managing, in order to determine that a specific response is intended for a specific workflow.

This feature is exemplified by the following table:

Table 1

| Workflow Instance | Workflow Engine | Note |
|---|---|---|
| Instance-ID1 | | This workflow instance is not related to a workflow engine. It is available for other engines |
| Instance-ID2 | Engine-ID2 | It is associated to a specific engine → it is not available for other engines |
| Instance-ID3 | Engine-ID3 | It is associated to a specific engine → it is not available for other engines |

Resuming a workflow instance means to deal with retrieving execution data from the workflow repository. Resuming comprises the following steps:

identifying the exact moment when resuming must be performed: the exact moment can be identified when a response (e.g. a message) requesting for a resume of an instance is received by a workflow engine able to resume the data in order to restart the execution.

Identifying the correct input (e.g. the message and the list of arguments) required to perform a restore information; the correct information in order to restart the workflow execution from the stopping point should be related to a bookmark-like concept and it should contain a reference to the workflow instance and to the workflow task instance that was waiting before saving and dumping the workflow execution.

Identifying the required information to be retrieved in order to perform a restore operation; the required information must be the set of all data to unique identify the starting point and it should be as the one that have been saved before dumping the workflow. It could be a set of records for that particular workflow instance including the list of pending tasks, the reasons why these tasks were pending, the actual value of the workflow variables (these could also be complex structures).

Identifying the correct format.

The information must be retrieved by querying the database and a transaction mechanism should be in place. Restoring the information is a process analogue of saving the same information. The workflow engine is adapted for requesting the workflow information for a particular workflow instance.

The present invention has the advantage of being specifically designed for MES/MOM applications, in particular embracing embracing the SOA (Service-oriented architecture) architectural paradigm. It does not impose a specific technology used for both storing and consuming the workflow information (e.g. both MS SQL Server and Oracle can be utilized).

A further advantage is that it allows to release resources for the system, which a long-running condition would keep unavailable. The resuming can be performed at an appropriate time. Of course reliability of the whole system is improved, since recovering from a crash is possible. It further provides, by saving, in particular incrementally saving, a series of data, which can later be visualized and reported and can be used for system analysis.

List of reference signs:

11  Tasks
12  Flow diagram branches
13  Execution steps
21  Task
22  Task
23  Task
31  Task
32  Task

33   Task
34   Task
41   Workflow definition
42   workflow element definition
43   Workflow instance
44   Workflow element instance
51   Starting point
52   End point
53   Activities
54   Point of data storage

**Claims**

1. Method for dealing with a long-running condition during the execution of a MES or MOM related workflow, the method comprising:

   detecting the occurrence of a long-running condition during the execution of a workflow instance belonging to the workflow;
   saving (53) execution data of the workflow instance in order to prevent loss of execution data;
   unloading the workflow instance;
   restoring the execution data of the previously unloaded workflow instance;
   restoring the execution of the workflow from where it has been suspended.

2. Method according to claim 1, wherein the long running condition is determined based on a threshold value L determined each time an execution step (13), comprising one or more tasks (11) to be executed at the same time, is started.

3. Method according to claim 1, wherein the long running condition is determined based on a threshold value L which is fixed for each execution step (13) comprising one or more tasks (11) to be executed at the same time.

4. Method according to any of the preceding claims wherein the data are saved in an appropriate database and are retrieved from the database upon restoring.

5. Software product capable of performing a method according to any of the preceding claims.

6. Workflow engine comprising a software product according to claim 5.

7. Workflow engine according to claim 6, wherein the execution of the method can be disabled.

8. Workflow engine according to claim 7, wherein the execution of the method is disabled automatically when predetermined conditions exist.

FIG 1

FIG 2

FIG 3

StartEvent

FIG 4

FIG 5

**Europäisches Patentamt**
**European Patent Office**
**Office européen des brevets**

# EUROPEAN SEARCH REPORT

Application Number

EP 16 20 7443

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/069596 A1 (HATOUN GEORGE F [US] ET AL) 30 March 2006 (2006-03-30) * paragraphs [0041] - [0043] * | 1-8 | INV. G06Q10/06 |
| X | Anonymous: "Identify and Abort/Stop long running workflows", , 1 January 2013 (2013-01-01), XP055345081, Retrieved from the Internet: URL:https://marketplace.informatica.com/solutions/identify_and_abort_stop_long_running_workflows [retrieved on 2017-02-13] * the whole document * | 1-8 | |
| A | US 6 601 035 B1 (PANAGOS EUTHIMIOS [US] ET AL) 29 July 2003 (2003-07-29) * column 2, line 42 - column 3, line 3; figures 3a,3b * | 1-8 | |
| | | | **TECHNICAL FIELDS SEARCHED (IPC)** G06Q |

The present search report has been drawn up for all claims

| Place of search | Date of completion of the search | Examiner |
|---|---|---|
| Munich | 16 February 2017 | Stratford, Colin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 7443

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2017

| Patent document cited in search report | | Publication date | Patent family member(s) | Publication date |
|---|---|---|---|---|
| US 2006069596 | A1 | 30-03-2006 | NONE | |
| US 6601035 | B1 | 29-07-2003 | NONE | |

EPO FORM P0459

For more details about this annex : see Official Journal of the European Patent Office, No. 12/82